# EUROPÄISCHE PATENTSCHRIFT

(11) **EP 0 629 808 B1**
(45) Veröffentlichungstag und Bekanntmachung des Hinweises auf die Patenterteilung: **14.10.1998**
(21) Anmeldenummer: 94810314.8
(22) Anmeldetag: 30.05.1994
(51) Int. Cl.: F16L 51/00, B23B 5/16

(54) **Anordnung zur Begrenzung der linearen Wärmedehnung in Kunststoffrohr-Installationen für fliessfähige Medienströme**
Arrangement for limiting the linear thermal expansion in plastic pipe installations for fluids
Arrangement pour limiter la dilatation thermique linéaire dans des tuyauteries en matière plastique pour fluides

(30) Priorität: 07.06.1993 CH 1700/93
(43) Veröffentlichungstag der Anmeldung: 21.12.1994
(73) Patentinhaber: J.+ R. Gunzenhauser AG, CH-4450 Sissach (CH)
(72) Erfinder: Bürli, Kurt, CH-4463 Buus (CH)
(74) Vertreter: Ullrich, Gerhard, Dr.

(56) Entgegenhaltungen:
- EP-A- 0 217 704
- DE-A- 2 354 731
- DE-A- 3 212 150
- US-A- 3 335 758

## Beschreibung

Die Erfindung betrifft eine Anordnung zur Verhinderung von an Kunststoffrohr-Installationen infolge von Temperaturschwankungen auftretenden Verwerfungen.

Herkömmlich wurden zur Verteilung von strömenden Medien, wie Kalt- oder Warmwasser, Metallrohre, vor allem aus Stahl oder Kupfer, eingesetzt. Derartige Rohr-installationen unterliegen einer beachtlichen äusseren und inneren Korrosion; sie neigen relativ schnell im Rohrinneren zum Aufbau von Ablagerungsschichten, wodurch sich der Strömungsquerschnitt zunehmend verengt. Ueberdies sind Metallrohre verhältnismässig schwer und aufwendig in der Montage.

Die bestehenden Nachteile bei Metallrohren führten zu weitverbreiteter Anwendung von Kunststoffrohren. Sofern die Kunststoffrohre beispielsweise nur Kaltwasser leiten und kaum Temperaturschwankungen ausgesetzt sind, gibt es auch keine Probleme mit der physikalischen Erscheinung der thermischen Längenausdehnung. Treten jedoch erhebliche Temperaturschwankungen auf, wie etwa in Heisswasserleitungen, und sind grössere Rohrlängen vorhanden, dann wirkt sich der etwa 20-fache Wert des linearen Ausdehnungskoeffizienten α von für Rohre verwendetem Kunststoff (z.B. Polyethylen) gegenüber Stahlrohren sehr störend aus. Längere Rohrstücke zeigen aufgrund der beträchtlichen Wärmeausdehnung deutliche Verwerfungen, gerade Rohrstrecken bilden irreguläre Ausbeulungen. Solche Deformationen können die Dichtheit von in der Rohrstrecke angeordneten Muffen oder Armaturenanschlüssen gefährden. Ferner aber entstünde, ohne stabilisierende Massnahmen, besonders bei einem Bündel von Rohren durch die unregelmässigen Verformungen ein wildwüchsiger Gesamteindruck der Rohrführung.

Zur Verhinderung dieser verunstaltenden und dichtheitsgefährdenden Erscheinungen sieht man die Verankerung des Kunststoffrohres zwischen Fixpunkten vor. Ein Fixpunkt muss wesentlich massiver als eine blosse Rohraufhängung ausgebildet sein, denn es sind beachtliche axiale Kräfte, die bei der Wärmeausdehnung des Kunststoffrohres entstehen, abzufangen. Fixpunkte sind stabile Halterungen des Rohres an der Wand oder der Decke, wo das Rohr entlanggeführt wird. Ein Fitting oder eine spezielle Fixpunktmuffe wird von einer festen Schelle umgriffen, die auf einem Distanzstück aufsitzt, welches andererseits in einer am Mauerwerk befestigten Grundplatte verankert ist. Mit zunehmendem zu überbrükkendem Abstand zwischen der Rohrstrecke und der Wand bzw. Decke vergrössern sich die axial zum Rohr wirkenden Hebelkräfte, so dass die Fixpunkte sehr widerstandsfähig, mitunter noch mit Verstrebungen, ausgelegt werden müssen. Damit das zwischen Fixpunkten gehalterte Rohr nicht ausgelenkt wird, muss es auch längs geführt werden; dazu benutzt man das Rohr umgebende, an diesem befestigte und nahezu über seine gesamte Länge sich erstreckende, starre Halbschalen. Eine Längenausdehnung der Rohres kann damit nicht mehr stattfinden, das Ausdehnungsbestreben fliesst zwangsweise in ein Dickenwachstum. Diese bisherige Konstruktion zur Rohrstabilisierung bringt zwar ein zufriedenstellendes Resultat bezüglich der Verhinderung von Verwerfungen, sie bedingt aber einen erheblichen Aufwand an Bauteilen und Montagearbeiten vor Ort.

Andere wirksame Massnahmen zur Beherrschung der temperaturabhängigen beachtlichen Längenausdehnung von Kunststoffrohr-Installationen sind nicht bekannt. Der in der DE-OS 37 25 632 beschriebene Rohrführungsbogen bezweckt neben der Halterung und Führung eines Rohres auch einen Ausgleich der auftretenden temperaturbedingten Längenänderungen. Hier lässt man das "arbeitende" Rohr im Führungsbogen "wandern". Längere Rohrstrecken verwerfen sich aber dennoch, so dass auf diese Weise die negativen Auswirkungen der Wärmeausdehnung nicht unterdrückbar sind.

Auch Massnahmen, im Kunststoffrohrmantel andere Materialien als Verstärkungseinlagen - z.B. perforierte Bleche, Metallgitter oder Streckmetall mit rautenförmigen Maschen (vgl. DE-AS 23 54 731) - einzubringen, ermöglichten nicht, die Wärmeausdehnung zu reduzieren oder zu beherrschen. Vielmehr ging es darum, dass die Rohre hohen Beanspruchungen standhalten und dass durch besondere Gestaltung der Verstärkungseinlagen diese der Wärmeausdehnung des Kunststoffes folgen können, ohne unerwünschte Spannungen zwischen beiden Materialien hervorzurufen.

Somit verbleibt zu resümieren, dass bisher keine technisch befriedigende Lösung zur Beherrschung der in Kunststoffrohr-Installationen störenden Wärmeausdehnung gefunden wurde. Die vorliegende Erfindung hat sich daher die Aufgabe gestellt, eine Anordnung zu schaffen, mit der die erhebliche lineare Längenänderung von Kunststoffrohren bei Temperaturschwankungen unterdrückt werden kann, ohne dass aufwendige massive Abstützungen an den Decken oder Wänden erforderlich sind, an welchen die Kunststoffrohre entlanggeführt werden. Die Anordnung soll mit möglichst wenig Bauteilen auskommen, und sie muss die erforderliche Dichtheit zwischen dem geführten Medium und der Umgebung gewährleisten. Es muss die Anpassbarkeit an in der Rohrleitung befindliche Bögen, Verlängerungen, Fittinge und Armaturen gegeben sein. Sowohl für einschichtige Kunststoffrohre als auch für ummanteltes Zwei- oder Mehrschichtrohr soll die Stabilisierungs-Anordnung verwendet werden können. Materialeinsatz und Montageaufwand sind in wirtschaftlichen Grenzen zu halten.

Das Wesen der in Anspruch 1 definierten Erfindung besteht darin, die bisher über stabile Abstützungen, welche an den rohrführenden Gebäudedecken oder -wänden angebracht werden, abgefangenen Ausdehnungskräfte - vom Kunststoffrohr entwikkelt -, die über die durch die Hebelwirkung verkomplizierten Abstützungen schliesslich in die Mauerwerksteile eingeleitet werden, an denen sie befestigt sind, nun unmittelbar mit einem sich längs erstreckenden und auf dem zu stabilisierenden Kunststoffrohr fixierten stützschalenartigen Mantel von wesentlich geringerem linearem Ausdehnungskoeffizienten zu beherrschen. Die Fixierung des Mantels auf dem Kunststoffrohr zumindest an zwei, die zu stabilisierende Rohrstrecke einschliessenden Abstützungen, verhindert eine Relativbewegung zwischen dem dehnungsintensiveren Kunststoffrohr und dem weniger "anfälligen" Mantel. Hierdurch wird zwangsweise die temperaturabhängige Längenänderung des Kunststoffrohres auf das Mass der wesentlich geringeren Längenänderung des das Kunststoffrohr einzwängenden Mantels begrenzt.

Ausführungsbeispiele der erfindungsgemässen Lösung werden nachstehend unter Bezugnahme auf die beiliegenden Zeichnungen beschrieben. Dabei zeigen:
- Figur 1:: die Schnittdarstellung eines Kunststoffrohres in normaler Rohrwandungsstärke mit gelochtem, halbschalenartigem Mantel, Nockenband, Schelle und getrenntem Verbinder;
- Figur 2:: die Schnittdarstellung eines Kunststoffrohres in reduzierter Rohrwandungsstärke mit gelochtem, vollschalenartigem Mantel, Umfassungsteil sowie integriertem Verbinder; und
- Figur 3:: die Schnittdarstellung eines Kunststoffrohres in reduzierter Rohrwandungsstärke mit gelochtem, vollschalenartigem Mantel und einer Elektroschweissmuffe.

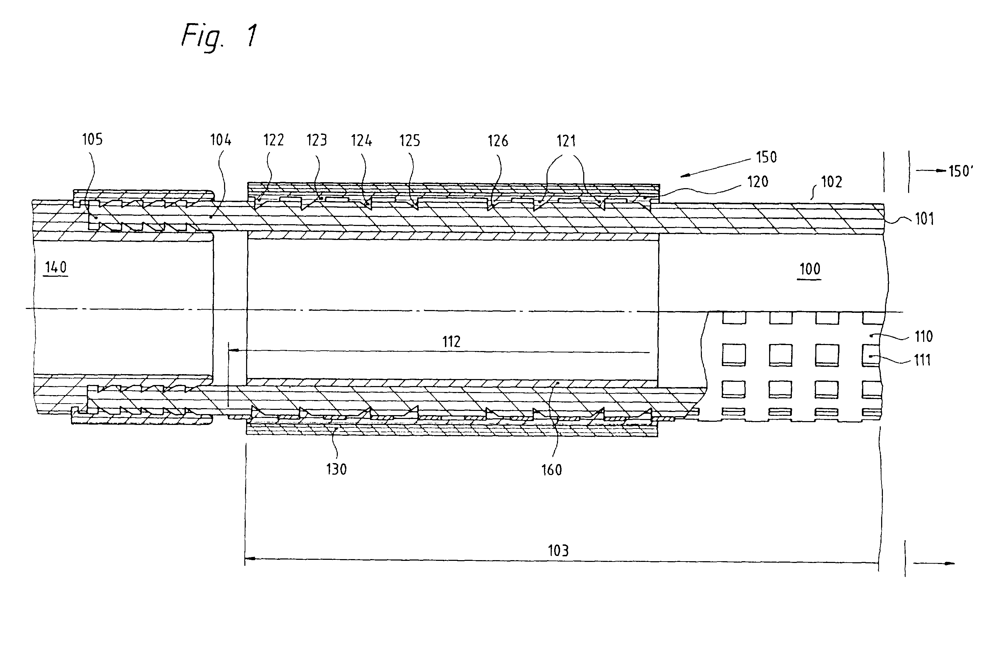

Gemäss Figur 1 ist das Kunststoffrohr 100, welches eine den Einsatzbedingungen entsprechende starke Rohrwandung 101 besitzt, keine Verstärkungseinlagen aufweist und beispielsweise aus vernetztem Polyethylen (VPE) besteht, mit einem perforierten Mantel 110 partiell umgeben. Der Mantel 110 verläuft halbschalenartig längs des Kunststoffrohres 100 an seinem unteren Abschnitt und umschliesst die Rohroberfläche 102 etwa im Bereich von 180°. Der Mantel 110, ein Metallblech, weist eine regelmässige Perforation - z.B. in Zeilen und Reihen verlaufende rechteckige systematische Lochungen 111 - auf. Dieser Mantel 110 erstreckt sich über eine gesamte gerade Rohrstrecke 103 oder endet vorzeitig an einem Fitting, falls Einbauten bzw. Muffen vorhanden sind. An den Endabschnitten 112 des Mantels 110 sind je eine Abstützung 150 und 150' vorgesehen, so dass eine zu stabilisierende Rohrstrecke 103 stets von zwei Abstützungen eingezwängt ist. Im Bereich der Abstützung 150 ist um das Kunststoffrohr 100 als zweite Schicht über dem Mantel 110, ein der Rundung anpassbares Nockenband 120 gelegt. Als dritte Schicht über dem Nockenband 120 umschliesst ein Umfassungsteil 130, hier eine Schelle, die Abstützung 150 fest. Das Nockenband 120 weist an seiner dem Mantel 110 zugewandte Oberfläche einen zu den darin befindlichen systematischen Lochungen 111 komplementären Nockenraster 121 auf. Die erhabene einzelne Nocke 122 besitzt einen Sockel 123 mit einem angeformten Sägezahn 124, der von einer vertikalen und einer angeschrägten Flanke 125, 126 gebildet wird. Die Ausrichtung der Sägezähne 124 wechselt, so dass in gleichmässiger Verteilung Sägezähne 124 mit rechtsbündigen und linksbündigen vertikalen Flanken 125 vorhanden sind. Wird mit dem Umfassungsteil 130 die Abstützung 150 zusammengepresst und vorher der Nockenraster 121 nach den Lochungen 111 ausgerichtet, so werden die Sockel 123 in den Lochungen 111 sitzen und die Sägezähne 124 in die Rohroberfläche 102 des Kunststoffrohres 100 eindringen. Die Abstützung 150 grenzt hier an den Verbinder 140, ist aber von diesem völlig getrennt. Das Rohrendstück 104 des Kunststoffrohres 100 ragt aus der Abstützung 150 heraus und mündet, wie auch der Rohrabschluss 105 selbst, im Verbinder 140. In das Rohrendstück 104 kann man eine Stützhülse 160 einschieben, die sich etwa über den Bereich des Umfassungsteiles 130 erstreckt, falls das Kunststoffrohr 100 dem Quetschdruck des Umfassungsteiles 130 ansonsten nicht standhält.

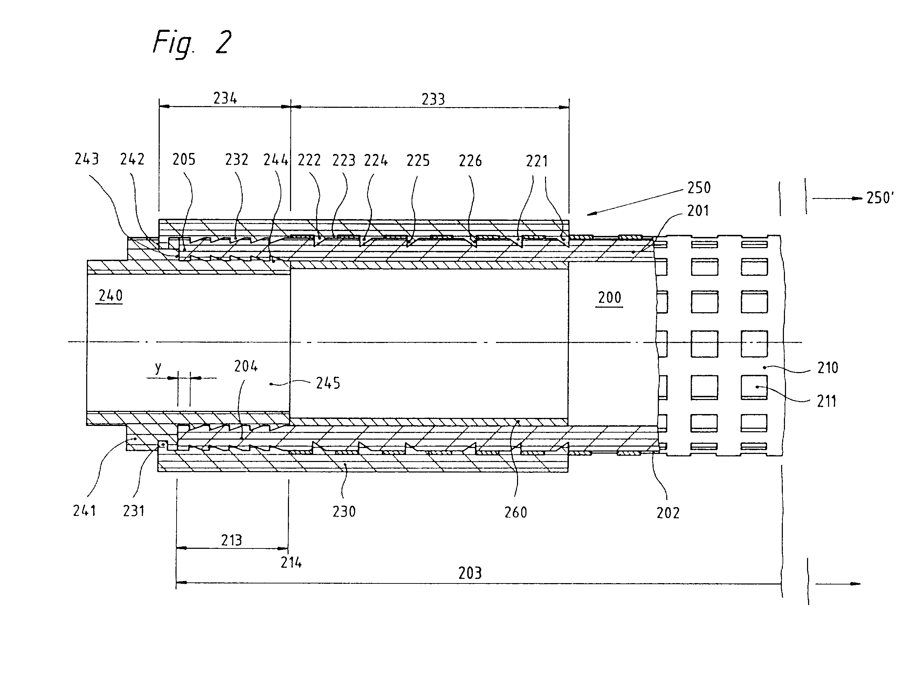

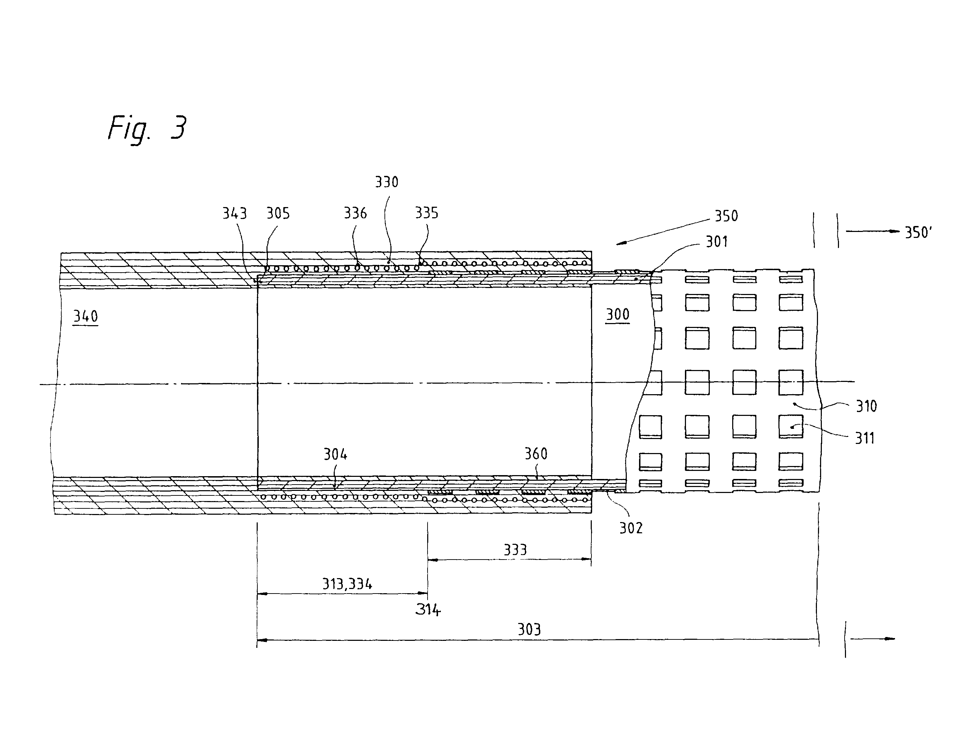

Identisch oder in gewissem Sinne ähnlich (siehe hierzu die Erläuterungen zu den Ausführungsbeispielen gemäss Figuren 2 und 3) ist die Abstützung 150' aufgebaut. Tritt nun ein Temperaturwechsel ein, hat das Kunststoffrohr 100 entsprechend seinem linearen Ausdehnungskoeffizienten α_{K} das Bestreben nach einer adäquaten Längenänderung, d.h. Ausdehnung bei Temperaturanstieg bzw. Verkürzung bei Temperaturabfall. Der Ausdehnungskoeffizient α_{M} des Materials des Mantels 110 ist um ein Vielfaches geringer als α_{K}. Bei der Bedingung α_{M}<<α_{K} wirkt der an die zu stabilisierende Rohrstrecke 103 angelegte Mantel 110, der in den Abstützungen 150 und 150' durch die in die Lochungen 111 eingreifenden Nocken 122 und die in der Rohroberfläche 102 verkrallten Sägezähne 124 auf dem Kunststoffrohr 100 fixiert ist, für diese Rohrstrecke 103 als Zwangsbegrenzung. Die Ausdehnung oder Schrumpfung des Mantels 110 ist nur ein Bruchteil der Längenänderung, die das Kunststoffrohr 100 ungezwungen durchlaufen würde. Durch die Fixierung des Mantels 110 an den beiden Abstützungen 150 und 150' wird die an sich vielfach grössere Längenänderung Δl_{K} des Kunststoffrohres 100 zwangsweise auf der Grösse der Längenänderung Δl_{M} des Mantels 110 gehalten. Das betrifft sowohl die Ausdehnung bei Längenzunahme als auch die Schrumpfung bei Längenabnahme. Damit beiden Aenderungsrichtungen des Kunststoffrohres 100 sich die Sägezähne 124 frontal entgegenstemmen, wurden die Sägezähne 124 auf dem Nockenband 120 in gleichmässiger Verteilung mit rechts- und linksbündigen, vertikalen Flanken 125 vorgesehen.

Die Druck- oder Zugkräfte, die das Kunststoffrohr 100 bei Längenänderung infolge der Wärmedehnung entwickelt, werden vom Mantel 110 aufgenommen. Die erzwungene starke Limitierung der Längenänderung des Kunststoffrohres 100 auf das Mass derjenigen des Mantels 110 (Δl_{K} = Δl_{M}) hat zur Folge, dass bei Temperaturänderung des Kunststoffrohres 100 der Dehnungs- bzw. Schrumpfungsvorgang zum überragenden Teil nicht mehr als in einer Kunststoffrohr-Installation störende Längenänderung auftritt, sondern die volumenmässige Materialzu-bzw. -abnahme auf den Querschnitt des Kunststoffrohres 100 überführt wird.

Da Axialkräfte des Kunststoffrohres 100 vom Mantel 110 aufgenommen werden, bleiben die Rohraufhängungen von diesem Kräftespiel verschont. Sie müssen nur das Gewicht der Installation tragen und können demzufolge wesentlich unaufwendiger gestaltet werden. Es entfallen die bisher notwendigen massiven Fixpunktkonstruktionen, das Anbringen von hochbelastbaren Grundplatten, Verstrebungen und Fixpunktmuffen an den Rohrenden.

Die Anordnung des Mantels 110 am unteren Abschnitt des Kunststoffrohres 100 ist nicht zwingend - auch eine andere frei wählbare Lage käme in Betracht -, aber insoweit vorteilhaft, als auf diese Weise das Kunststoffrohr 100 zugleich gegen Durchhängen weiter stabilisiert wird. Ferner ist es für die Montage von Vorteil, wenn der Mantel 110 über den Bereich der Halbschale von 180° etwas hinausgeht, so aufgrund seiner radialen Elastizität auf das Kunststoffrohr 100 geschnappt werden kann und bei der weiteren Montage nicht extra gehalten werden muss. Da der Mantel 110 wechselweise mit Druck- und Zugkräften belastet wird, erweist sich ein über das Halbschalenformat hinausgehender Mantel 110 für die Stabilisierung als besonders günstig. Auch ist es möglich, den Mantel 110 in zwei Schalen von jeweils unter 180° Bogenlänge aufzuteilen, die dann allerdings etwa diametral auf dem Kunststoffrohr 100 angeordnet werden sollten.

Als weitere Alternative ist zu nennen, die Lochungen 111 im Mantel 110 nur im Bereich der Abstützungen 150 und 150' vorzusehen, denn lediglich hier ist ein Nockenband 120 als zweite Schicht über dem Mantel 110 um das Kunststoffrohr 100 gelegt, und die Sägezähne 124 des auf dem Nockenband 120 befindlichen Nockenrasters 121 müssen in der vorbeschriebenen Weise dazu komplementäre Lochungen 111 im Mantel 110 durchdringen und sich in der Rohroberfläche 102 verkrallen können. Möglich ist es auch, die Rückseite des Nockenbandes 120 mit dem Inneren des Umfassungsteiles 130 zu verbinden, z.B. durch Verkleben, um diese Kombination als ein einheitliches Bauteil zu montieren.

Bisher ging man davon aus, dass um das Kunststoffrohr 110 als erste Schicht der von der benachbarten Abstützung 150' herkommende Mantel 100 liegt, während auf letzterem - als zweite Schicht - das Nokkenband 120 angeordnet ist, und sich schliesslich darüber das Umfassungsteil 130 als dritte schicht befindet. Ebenfalls gangbar ist, die Schichtfolge im Verbund der Abstützung 150 zwischen dem Mantel 110 und dem Nockenband 120 zu wechseln. Somit liegt um das Kunststoffrohr 100 als erstes das Nockenband 120, darüber der Mantel 110 und zuletzt - wie gehabt - das Umfassungsteil 130. Diese veränderte Positionierung des Nokkenbandes 120 verlangt allerdings seine konstruktive Modifikation. Nach der zuvor beschriebenen Gestaltungsart besteht die einzelne erhabene Nocke 122 des zu den Lochungen 111 im Mantel 110 komplementären Nockenrasters 121 aus einem Sockel 123, der den Raum einer Lochung 111 einnimmt, und einem angeformten Sägezahn 124, der in die Rohroberfläche 102 des Kunststoffrohres 100 eindringt. Sockel 123 und Sägezahn 124 gehen ineinander über und liegen auf einer Seite des Nockenbandes 120, nämlich auf der der Rohroberfläche 102 zugewandten. Wird das Nockenband 120 als erste Schicht um das Kunststoffrohr 100 gelegt und darüber der Mantel 110 angeordnet, müssen die Sockel 123 auf der einen Seite des Nockenbandes 120 angebracht sein - auf der dem Mantel 110 zugewandten -, während die Sägezähne 124 auf der anderen - der der Rohroberfläche 102 zugewandten Seite - angeformt sind. Auf diese Weise ist die Fixierung des Mantels 110 auf der Rohroberfläche 102 im Bereich der Abstützung 150 auch realisierbar. Vom Umfassungsteil 130 wird der Verbund zusammengedrückt, wodurch die Sägezähne 124 in die Rohroberfläche eindringen und die Sockel 123 in den komplementären Lochungen 111 des über dem Nockenband 120 liegenden Mantels 110 sitzen.

Eine Variante ist auch, auf ein separates Nockenband 120 gänzlich zu verzichten und den zu den Lochungen 111 komplementären Nockenraster 121 als innere Oberflächenstruktur des Umfassungsteiles 130 in einem homogenen Bauteil auszubilden. Hier kämen unter anderem Spritzgussteile aus Kunststoff hoher Festigkeit, geschmiedete Teile oder Metallblech mit aufgebrachtem oder ausgestanztem Nockenraster 121 in Betracht.

Der Mantel 110 muss nicht aus Metallblech bestehen; massgeblich ist, dass das Material die erforderlichen physikalischen Eigenschaften aufweist. Das heisst, es muss einen gegenüber herkömmlichen Kunststoffrohren, z.B. aus vernetztem Polyethylen, sehr kleinen linearen Ausdehnungskoeffizienten α_{M} aufweisen, also die Bedingung α_{M}<<α_{K} erfüllen. Ferner muss das Mantelmaterial die nötige Festigkeit mit sich bringen, sich perforieren lassen und sich schalenartig an das Kunststoffrohr 100 zur Erfüllung seiner Stabilisierungsfunktion anfügen.

Für das Nockenband 120 eignet sich faserverstärkter Kunststoff mit entsprechender Festigkeit der Nocken 122 und Elastizität des Bandes. Auch Metallblechstreifen mit ausgestanztem Nockenraster 121 sind einsetzbar.

Gemäss Figur 2 ist das Kunststoffrohr 200 vollständig - im Gegensatz zur Ausführung nach Figur 1 - mit einem perforierten Mantel 210, der gleichfalls die systematischen Lochungen 211 aufweist, umgeben. Dieser Mantel 210, eine Art enganliegende Röhre oder Vollschale, hat nicht nur den bei der Wärmedehnung entstehenden Axialkräften standzuhalten, sondern nimmt auch die durch den Mediumsdruck an die Rohrwandung 201 abgegebenen Radialkräfte auf. Folglich kann das Kunststoffrohr 200 dünnwandiger - als im Normalfall nach Figur 1 - ausgelegt werden, wodurch sich bei unverändertem Aussendurchmesser die Durchflussquerschnittfläche vergrössert und sich damit, bei ansonsten konstanten Bedingungen, die Durchflussmenge erhöht. Die zu stabilisierende Rohrstrecke 203 wird von den beiden Abstützungen 250 und 250' eingeschlossen, wobei man, abgesehen von einer möglichen unterschiedlichen Fortführung der Installation, jeweils hinter den Abstützungen 250 und 250' davon ausgeht, dass diese identisch oder in gewissem Sinne ähnlich aufgebaut sind (siehe hierzu die Erläuterungen zu den Ausführungsbeispielen gemäss Figuren 1 und 3). Zunächst erstreckte sich der vollschalige Mantel 210 bis an den Rohrabschluss 205 des dünnwandigeren Kunststoffrohres 200. Mit einem Fräswerkzeug wird der Mantel 210 vom Rohrabschluss 205 um die Frässtrecke 213 bis zum Fräsabsatz 214, wo in dem die Abstützung 250 umgebenden Umfassungsteil 230, hier eine Schelle, der Nockenraster 221 in Halterillen 232 übergeht, zurückgefräst. In das herausragende Rohrendstück 204 des Kunststoffrohres 200 - der Bereich des zurückgefrästen Mantels 210 - ist eine Steckhülse 241 eingeschoben, wobei der Rohrabschluss 205 des Kunststoffrohres 200 am Anschlagflansch 243 der Steckhülse 241 anliegt. Die Steckhülse 241 besitzt an ihrem Einschubteil 245 äussere umfangsseitig angeordnete Dichtrillen 244 von sägezahnartigem Querschnittprofil. Diese Dichtrillen 244 greifen vom Innendurchmesser her in die Rohrwandung 201 des Kunststoffrohres 200 ein. In der Steckhülse 241 ist ferner eine Ringnut 242 - im Abstand y vom Anschlagflansch 243 - zur Aufnahme der Ringkralle 231 des Umfassungsteiles 230 vorgesehen. Es kann bei sehr reduzierter Stärke der Rohrwandung 201 des Kunststoffrohres 200 zweckmässig sein, im Wirkbereich des Umfassungsteiles 230, innerhalb des Kunststoffrohres 200 und vor der Steckhülse 241, eine Stützhülse 260 einzubringen, damit das Kunststoffrohr 200 - mit dem dieses umgebenden Mantel 210 - dem Quetschdruck des Umfassungsteiles 230 nicht entweicht.

Ueber die Abstützung 250, einschliesslich dem integrierten Verbinder 240 - im Gegensatz zur Ausführung nach Figur 1 -, erstreckt sich das einteilige Umfassungsteil 230, das sich in zwei Funktionsbereiche aufspaltet, das eigentliche Abstützteil 233 sowie das verlängerte und auf die Steckhülse 241 übergreifende und als Klemmring wirkende Verschlussringteil 234. Am Verschlussringteil 234 befindet sich die Ringkralle 231, welche in die Ringnut 242 in der Steckhülse 241 eingreift. Diese Verbindung stellt eine zusätzliche Sicherung für den festen Sitz der Steckhülse 241 im Rohrendstück 204 des Kunststoffrohres 200 dar, welche ansonsten noch durch die am äusseren Umfang des in das Rohrendstück 204 eingeschobenen Einschubteiles 245 der Steckhülse 241 befindlichen sägezahnartigen Dichtrillen 244, die in das Rohrendstück 204 eingreifen, in letzterem gehalten wird. Die Halterillen 232 am Umfassungsteil 230 und die Dichtrillen 244 an der Steckhülse 241 können von gleicher Kontur sein, müssen sich zwangsläufig aber nicht über die gleichen Distanzen auf der Steckhülse 241 und dem Verschlussringteil 234 erstrekken, da das im Rohrendstück 204 des Kunststoffrohres 200 sitzende Einschubteil 245 der Steckhülse 241 auch nicht in Höhe des Fräsabsatzes 214 enden muss.

Vom Fräsabsatz 214 beginnend und von der Steckhülse 241 wegweisend verläuft über dem Mantel 210 das eigentliche - als Schelle wirkende - Abstützteil 233 des Umfassungsteiles 230, das sich über den verbleibenden Sektor der Abstützung 250 erstreckt. Dieses Abstützteil 233 besitzt komplementär zu den systematischen Lochungen 211 im Mantel 210 - analog zu den Ausführungen unter Figur 1 - an seiner inneren, auf dem Mantel 210 liegenden Umfangsfläche einen Nockenraster 221. Die einzelne erhabene Nocke 222 besitzt einen Sockel 223 mit einem angeformten Sägezahn 224, der von einer vertikalen und einer angeschrägten Flanke 225 und 226 gebildet wird. Im geschlossenen Zustand dringen die Sockel 223 in die Lochungen 211, während die durch die Lochungen 211 hindurchragenden Sägezähne 224 in die äussere Rohroberfläche 202 des Kunststoffrohres 200 eindringen und sich dort verkrallen. Zweckmässigerweise, um beiden Aenderungsrichtungen des Kunststoffrohres 200 Sägezähne 224 frontal entgegenzustellen, wurde der Nockenraster 221 mit gleichmässig verteilten Sägezähnen 224 mit rechts- und linksbündigen vertikalen Flanken 225 ausgebildet. Bei entsprechend widerstandsfähiger Gestaltung der Verbindungen zwischen dem Verschlussringteil 234 und dem Rohrendstück 204 sowie der Steckhülse 241 - das betrifft die Halterillen 232 bzw. den Eingriff der Ringkralle 231 in die Ringnut 242 - und zwischen dem Rohrendstück 204 und der Steckhülse 241 - das betrifft die Dichtrillen 244 -, könnte man auf die Sägezähne 224 verzichten, da die Sockel 223 der Nocken 222 bereits in die Lochungen 211 eingreifen und neben der Klemmwirkung des Umfassungsteiles 230 auch die in der Ringnut 242 sitzende Ringkralle 231 Kräfte aufnimmt.

Wie unter Figur 1 bereits dargelegt, kann der Nockenraster 221 als Struktur auf der inneren Oberfläche des Umfassungsteiles 230 vorgesehen sein, oder es muss ein separates Nockenband 220 (nicht dargestellt) zwischen dem Mantel 210 und dem Umfassungsteil 230, im Bereich des Abstützteiles 233, eingefügt werden. Das Nockenband 220 hat auf seiner dem Abstützteil 233 zugewandten Oberfläche eine Profilierung, um ein gegenseitiges Verrutschen zu verhindern. Oder es wird ein separates Nockenband 220 (nicht dargestellt) zwischen der Rohroberfläche 202 und dem Mantel 210 im Bereich des Abstützteiles 233 eingefügt. Dieses Nockenband 220 hat - wie bereits beschrieben - beidseitig einen Raster; auf der einen Seite befinden sich die Sägezähne 224 und auf der anderen Seite die zu den Lochungen 211 komplementären Sockel 223. Das Umfassungsteil 230 kann einteilig und geschlitzt gestaltet sein oder mehrteilig mit entsprechenden Verbindungselementen, um ein festes Anpressen um die Abstützung 250 zu erzielen.

Gemäss Figur 3 besteht zur Ausführung nach Figur 2 insoweit Identität, als hier ebenfalls ein Kunststoffrohr 300 mit eventuell dünnerer Rohrwandung 301 und somit erhöhtem Durchlass, vollständig von einem systematisch perforierten Mantel 310 umgeben, der mit einem Fräswerkzeug um die Frässtrecke 313 bis zum Fräsabsatz 314 gekürzt wurde, vorliegt. Die zu stabilisierende Rohrstrecke 303 wird von den beiden Abstützungen 350 und 350' eingeschlossen, wobei man, abgesehen von einer möglichen unterschiedlichen Fortführung der Installation, jeweils hinter den Abstützungen 350 und 350' davon ausgeht, dass diese identisch oder in gewissem Sinne ähnlich aufgebaut sind (siehe hierzu die Erläuterungen zu den Ausführungsbeispielen der Figuren 1 und 2). Durch das Kürzen des Mantels 310 ragt ein Rohrendstück 304 des Kunststoffrohres 300 aus dem zweischichtigen Verbund heraus. Am Einschicht-Zweischicht-Uebergang entsteht der stufenförmige Fräsabsatz 314 mit einer Massdifferenz entsprechend der Materialstärke des Mantels 310.

In das Rohrendstück 304 kann man eine etwa doppelt so lange Stützhülse 360 einschieben, falls das Kunststoffrohr 300 - mit dem dieses umgebenden Mantel 310 - dem Quetschdruck des Umfassungsteiles 330 ansonsten nicht standhält (analog den Erläuterungen zu Figur 2). Ueber das vom Mantel 310 befreite Rohrendstück 304 und über etwa den gleichen Längenabschnitt des Mantels 310 wird als Umfassungsteil 330, welches zugleich weiterführender Verbinder 340 ist, eine Elektroschweissmuffe mit zum Fräsabsatz 314 komplementärer Abstufung 335 so geschoben, dass der Fräsabsatz 314 und die Abstufung 335 formschlüssig aneinanderliegen, wobei der Rohrabschluss 305 gleichzeitig am Anschlagflansch 343 des weiterführenden Verbinders 340 anliegt. Die im Umfassungsteil 330 eingebetteten Widerstandsdrähte 336 umgeben einerseits das Rohrendstück 304 und andererseits den überdeckten Längenabschnitt des Mantels 310.

Durch Anlegen einer Stromquelle bringen die sich aufheizenden Widerstandsdrähte 336 das darum befindliche Kunststoffmaterial zum Schmelzen. Es verschweissen sich die Kunststoffmaterialien beider Sektoren - das Verschlussringteil 334 und das Abstützteil 333 - des Umfassungsteiles 330 mit dem Rohrendstück 304 bzw. nach Durchdringen der Lochungen 311 im Mantel 310 punktförmig mit der Rohroberfläche 302 des darunter befindlichen Kunststoffrohres 300. Das Verschlussringteil 334 ist nun mit der Frässtrecke 313 des Kunststoffrohres 300 verbunden und gewährleistet die Dichtheit. Die Punktschweissungen zwischen Abstützteil 333 und der Rohroberfläche 302 durch den Mantel 310 hindurch fixieren letzteren auf der Rohroberfläche 302 und verhindern eine Relativbewegung, d.h. auch unterschiedliche lineare Wärmeausdehnung, zwischen dem Kunststoffrohr 300 und dem Mantel 310. Die Längenänderung des Kunststoffrohres 300 im Bereich der zu stabilisierenden Rohrstrecke 303, infolge von Temperaturänderungen, wird damit zwangsweise auf die wesentlich geringere Massänderung des Mantels 310 begrenzt. Die Ausdehnungskräfte des Kunststoffrohres 300 werden auf den Mantel 310 geleitet.

Die Abstützung 350 lässt sich auch mittels einer herkömmlichen Schweissmuffe mit einer Abstufung 335 aufbauen. Bei einer Elektroschweissmuffe bewirken die aufheizbaren Widerstandsdrähte 336 das Aufschmelzen des darum befindlichen Kunststoffmaterials. Bei einer gewöhnlichen Schweissmuffe müssen die zu verschweissenden Flächen vor dem Zusammenfügen mit von aussen zeitweilig ansetz- bzw. einführbaren Heizelementen erhitzt werden. Das betrifft hier den äusseren Umfang des Rohrendstückes 304 sowie die Innenfläche des auf das Rohrendstück 304 aufzuschiebenden Umfassungsteiles 330. Auch auf diese Weise kann deren Verschweissen, durch die im Mantel 310 befindlichen Lochungen 311 hindurch, erfolgen.

Die Punktschweissungen durch die Lochungen 311 haben eine äquivalente Mitnehmerfunktion wie der Nokkenraster 121 bzw. 221 mit den durch die Lochungen 111 bzw. 211 hindurchgreifenden und sich in der Rohroberfläche 102 bzw. 202 verkrallenden Sägezähnen 124 bzw. 224.

Für die Anordnung und Geometrie der Lochungen 111, 211, 311 im Mantel 110, 210, 310 sowie für die komplementären Nocken 122, 222 bzw. komplementären Sockel 123, 223 kommen auch andere Rasterungen als Reihen und Zeilen und andere Konturen als Rechtecke in Betracht. Entscheidend ist, dass der das Kunststoffrohr 100, 200, 300 umhüllende Mantel 110, 210, 310 so auf der Rohroberfläche 102, 202, 302 fixiert wird, dass keine Relativbewegung zwischen dem sich bei Temperaturwechsel naturgemäss stärker in seiner Länge ändernden Kunststoffrohr 100, 200, 300 und dem weniger "anfälligen" Mantel 110, 210, 310 stattfinden kann. Mit den verschiedenartigsten Fixpunkten durch den Mantel 110, 210, 310 hindurch kann selbiger auf der Rohroberfläche 102, 202, 302 fixiert werden. Schliesslich ist eine Fixierung des Mantels auf dem Kunststoffrohr auch dadurch erreichbar, wenn ein Umfassungsteil aufgeklebt wird und der Kleber durch die Lochungen im Mantel hindurchtritt.

Auch ist es praktizierbar, auf die Lochungen im Mantel zu verzichten und den ungelochten Mantel auf der Rohroberfläche wenigstens im Bereich der Abstützungen zu verkleben bzw. zu verschweissen. Dies kann unterhalb des Mantels, zwischen Mantel und Rohroberfläche, und/ oder als den Mantel und die Rohroberfläche überlappende Kleb- oder Schweissnaht geschehen. Die Kleb- oder Schweissnaht erstreckt sich bei halbschalenartigem Mantel axial entlang der Längskante und/oder radial entlang der Seitenkante. Bei vollschalenartigem Mantel erstreckt sich die Kleb- oder Schweissnaht radial entlang der Seitenkante. Eine weitere Alternative ist, einen Mantel mit höherer Rauhigkeit oder Profilrillen auf der inneren, dem Kunststoffrohr zugewandten Oberfläche einzusetzen. Bei entsprechendem Anpressdruck des Mantels auf die Rohroberfläche werden sich die Mantelunebenheiten in der Rohroberfläche verkrallen. Ferner ist es realisierbar, in einen ungelochten Mantel nach erfolgter Montage bei einem Temperaturmittelwert, von aussen her, nach innen gerichtete Dellen oder Zacken einzuprägen, die dann in die Rohroberfläche eingreifen und auf diese Weise eine Fixierung des Mantels bewirken. Die Fixierung eines ungelochten Mantels auf der Rohroberfläche ist auch erreichbar, wenn man an den Längs- und/oder Seitenkanten des Mantels auf die Rohroberfläche übergreifende und dort eindringende krallenartige Elemente anordnet.

## Patentansprüche

1. Anordnung zur Begrenzung der linearen Wärmedehnung infolge von Temperaturschwankungen in Kunststoffrohr-Installationen für fliessfähige Medienströme mit starrer Fixierung der zu stabilisierenden Rohrstrecke (103, 203, 303) eines Kunststoffrohres (100, 200, 300) und mit zwei Abstützungen zwischen denen die Fixierung erfolgt zur Aufnahme der beim Wärmedehnungsbestreben entwickelten Druck- und Zugkräfte und zwangsweiser Führung der zu stabilisierenden Rohrstrecke (103, 203, 303) in Stützschalen zur Verhinderung von Auslenkungen am Kunststoffrohr (100, 200, 300) innerhalb der zu stabilisierenden Rohrstrecke (103, 203, 303), dadurch gekennzeichnet, dass über die zu stabilisierende Rohrstrecke (103, 203, 303) ein diese partiell oder vollständig umgebender, in axialer Richtung starrer Mantel (110, 210, 310) verläuft, der in den zwei, die zu stabilisierende Rohrstrecke (103, 203, 303) einzwängenden Abstützungen (150, 150'; 250, 250'; 350, 350'), auf der Rohroberfläche (102, 202, 302) fest fixiert ist, und der einen wesentlich geringeren linearen Ausdehnungskoeffizienten (α_{M}) im Verhältnis zum linearen Ausdehnungskoeffizienten (α_{K}) des Kunststoffrohres (100, 200, 300) hat, wodurch die an sich naturgemäss wesentlich grössere Längenänderung (Δl_{K}) des Kunststoffrohres (100, 200, 300) zwangsweise auf die geringere Längenänderung (Δl_{M}) des Mantels (110, 210, 310) begrenzt wird, und letzterer zugleich Auslenkungen innerhalb der zu stabilisierenden Rohrstrecke (103, 203, 303) verhindert.

2. Anordnung nach Anspruch 1, dadurch gekennzeichnet, dass eine vom weiterführenden Verbinder (140) getrennte Abstützung (150) gebildet wird aus:
einem auf der Rohroberfläche (102) angeordneten Mantel (110), herkommend von der benachbarten Abstützung (150') und endend vor einem weiterführenden Verbinder (140), wobei der Mantel (110) aus zwei Teilschalen besteht, die sich auf der Rohroberfläche (102) diametral gegenüberliegen, oder einer Halbschale ≦ 180° bzw. einer das Kunststoffrohr (100) über 180° umfassenden erweiterten Halbschale oder einer Vollschale, welche das Kunststoffrohr (100) vollständig umgibt;
und Mitteln zur festen Fixierung des Mantels (110) auf der Rohroberfläche (102) im Bereich der Abstützung (150), wodurch eine axial gerichtete Relativbewegung zwischen dem Kunststoffrohr (100) und dem Mantel (110) verhindert wird.

3. Anordnung nach Anspruch 1 oder 2, dadurch gekennzeichnet, dass die feste Fixierung des Mantels (110) auf der Rohroberfläche (102) geschieht, mittels eines Nockenrasters (121), dessen einzelne Nocken (122) von aussen, durch zu diesem komplementär im Mantel (110) vorgesehene Lochungen (111) hindurchragen und sich in der Rohroberfläche (102) verkrallen, wobei sich der Nockenraster (121) direkt auf der inneren Oberfläche eines die Abstützung (150) fest umgreifenden Umfassungsteiles (130) in Form einer Schelle oder auf einem separaten, zwischen letzterem und dem Mantel (110) angeordneten Nockenband (120) befindet;
oder mittels eines Nockenbandes (120), das sich zwischen der Rohroberfläche (102) und dem Mantel (110) befindet, wobei auf der der Rohroberfläche (102) zugewandten Seite des Nockenbandes (120) Sägezähne (124) angeformt sind, die sich beim Andruck des diesen Verbund von aussen zusammenschliessenden Umfassungsteiles (130) in der Rohroberfläche (102) verkrallen, und auf der dem Mantel (110) zugewandten Seite des Nockenbandes (120) Sockel (123) in komplementärer Gestalt und Verteilung zu den Lochungen (111) im Mantel (110) derart angeformt sind, dass die Sockel (123) in den Lochungen (111) sitzen.

4. Anordnung nach Anspruch 1 oder 2, dadurch gekennzeichnet, dass die feste Fixierung des Mantels (110,310) auf der Rohroberfläche (102,302) geschieht, mittels eines Umfassungsteiles (330) in Form einer Schweissmuffe von der während des Schweissvorganges Material durch die Lochungen (111) im Mantel (110) hindurchdringt und sich mit den rasterartig verteilten Sektoren auf der Rohroberfläche (102) verbindet;
oder mittels einer vor bzw. während des Montagevorganges auf der der Rohroberfläche (102) zugewandten inneren Oberfläche des Mantels (110) aufgebrachten Struktur, die sich durch den Anpressdruck eines fest umgreifenden Umfassungsteiles (130) in der Rohroberfläche (102) verkrallt;
oder mittels einer Schweiss- bzw. Klebverbindung zwischen dem Mantel (110) und der Rohroberfläche (102).

5. Anordnung nach den Ansprüchen 1 und 3 oder 4, dadurch gekennzeichnet, dass die einen weiterführenden Verbinder (240) einschliessende Abstützung (250) gebildet wird aus:
einem auf der Rohroberfläche (202) eines Kunststoffrohres (200), mit in seiner Stärke wahlweise reduzierter Rohrwandung (201), angeordneten und das Kunststoffrohr (200) völlig umschliessenden, auch Druckkräfte des Strömungsmediums aufnehmenden Mantel (210), herkommend von der benachbarten Abstützung (250') und nach Kürzung vom Rohrabschluss (205) über die Länge einer Frässtrecke (213) in Richtung der benachbarten Abstützung (250') und am Fräsabsatz (214) endend;
einer im Rohrendstück (204) mit ihrem Einschubteil (245) sitzenden und sich an der inneren Oberfläche des Rohrendstückes (204) mittels Dichtrillen (244) verkrallenden Steckhülse (241);
einem Umfassungsteil (230), das aus einem Verschlussringteil (234) und einem sich anschliessenden Abstützteil (233) besteht, und letzteres die Fixierung des Mantels (210) auf der Rohroberfläche (202) bewirkt, wobei das Verschlussringteil (234) mittels Halterillen (232) sich an der äusseren Oberfläche des Rohrendstükkes (204) verkrallt und eine Ringkralle (231) in eine im Abstand (y) vom Anschlagflansch (243) der Steckhülse (241) befindliche Ringnut (242) eingreift.

6. Anordnung nach den Ansprüchen 1 und 4, dadurch gekennzeichnet, dass die einen weiterführenden Verbinder (340) einschliessende Abstützung (350) gebildet wird aus:
einem auf der Rohroberfläche (302) eines Kunststoffrohres (300), mit in seiner Stärke wahlweise reduzierter Rohrwandung (301), angeordneten und das Kunststoffrohr (300) völlig umschliessenden, auch Druckkräfte des Strömungsmediums aufnehmenden Mantel (310), herkommend von der benachbarten Abstützung (350') und nach Kürzung vom Rohrabschluss (305) über die Länge einer Frässtrecke (313) in Richtung der benachbarten Abstützung (350') und am Fräsabsatz (314) endend;
einem Umfassungsteil (330), das als herkömmliche Schweissmuffe oder Elektroschweissmuffe ausgebildet ist, die den Mantel (310) mit ihrem Abstützteil (333) umgibt, an deren Abstufung (335) der komplementäre Fräsabsatz (314) anliegt, die das abgemantelte Rohrendstück (304) - über die Frässtrecke (313) - mit ihrem Verschlussringteil (334) umgibt, an deren Anschlagflansch (343) der komplementäre Rohrabschluss (305) anliegt, und die sich im weiterführenden Verbinder (340) fortsetzt, wobei die bei der Elektroschweissmuffe im Umfassungsteil (330) eingebetteten Widerstandsdrähte (336) einerseits das Rohrendstück (304) und andererseits den überdeckten Längenabschnitt des mit Lochungen (311) versehenen Mantels (310) umgeben; und durch Anlegen einer Stromquelle die vollflächige Verschweissung zwischen dem Verschlussringteil (334) mit Rohrendstück (304) sowie die punktförmige Verschweissung zwischen dem Abstützteil (333) durch die Lochungen (311) im Mantel (310) hindurch mit der Rohroberfläche (302) des darunter befindlichen Kunststoffrohres (300) erfolgt; während bei der herkömmlichen Schweissmuffe eine gleichartige Schweissverbindung hergestellt wird, durch Aufschmelzen von Kunststoff an den zu verschweissenden Flächen, d.h. dem äusseren Umfang des Rohrendstückes (304) sowie der Innenfläche des auf das Rohrendstück (304) aufzuschiebenden Umfassungsteiles (330), vor dem Zusammenfügen mittels von aussen zeitweilig ansetz-bzw. einführbaren Heizelementen.

7. Anordnung nach einem der Ansprüche 2 bis 6, dadurch gekennzeichnet, dass eine den Anpressdruck des Umfassungsteiles (130, 230, 330) abfangende Stützhülse (160, 260, 360) vom Rohrabschluss (105, 205, 305) her in das Kunststoffrohr (100, 200, 300) eingeschoben wird.

8. Anordnung nach Anspruch 3, dadurch gekennzeichnet, dass das Nockenband (120) einen zu den Lochungen (111, 211) nach deren Geometrie und Verteilung komplementären Nockenraster (121) aufweist und die einzelnen Nocken (122) passfähig zur Form der Lochungen (111, 211) konturierte Sockel (123) mit einer Höhe, die etwa der Materialstärke des Mantels (110, 210) entspricht, besitzen, und auf den Sockeln (123) Sägezähne (124) mit je einer vertikalen Flanke (125) und je einer angeschrägten Flanke (126) angeformt sind, wobei die Sägezähne (124) auf dem Nockenband (120) in gleichmässiger Verteilung mit rechts- und linksbündigen vertikalen Flanken (125) angeordnet sind, während das Nokkenband (120) auf seiner dem Umfassungsteil (130, 230) zugewandten Oberfläche strukturiert sein kann;
oder dass das Nockenband (120) einerseits einen zu den Lochungen (111, 121) nach deren Geometrie und Verteilung komplementären Raster von Sockeln (123) aufweist, wobei die passfähig zur Form der Lochungen (111, 121) konturierten Sockel (123) eine etwa der Materialstärke des Mantels (110, 210) entsprechende Höhe besitzen, und dass das Nockenband (120) andererseits Sägezähne (124) mit je einer vertikalen Flanke (125) und je einer angeschrägten Flanke (126) aufweist, während die Sägezähne (124) auf dem Nockenband (120) in gleichmässiger Verteilung mit rechts- und linksbündigen vertikalen Flanken (125) vorgesehen sind.

## Claims

1. Arrangement for limiting the linear thermal expansion due to temperature variations in plastic pipe installations for free-flowing media flows, with rigid fixing of the section of pipe (**103,203,303**) to be stabilized of a plastic pipe (**100,200,300**) and with two supports, between them the fixing occurs, for taking up the compressive and tensile forces induced by the tendency towards thermal expansion and with positive guidance of the section of pipe (**103,203,303**) to be stabilized in supporting shells for preventing deflections at the plastic pipe (**100,200,300**) within the section of pipe (**103,203,303**) to be stabilized, characterized in that over the section of pipe (**103,203,303**) to be stabilized there runs a jacket (**110,210,310**), which partially or completely surrounds the said section of pipe, is rigid in the axial direction, is securely fixed on the surface of the pipe (**102,202,302**) in the two supports (**150,150';250,250';350,350'**) constraining the section of pipe (**103,203,303**) to be stabilized and has a significantly lower coefficient of linear expansion (α_{M}) in relation to the coefficient of linear expansion (α_{K}) of the plastic pipe (**100,200,300**), whereby the inherently much greater change in length (ΔI_{K}) of the plastic pipe (**100,200, 300**) is forcibly restricted to the lesser change in length (ΔI_{M}) of the jacket (**110,210,310**) (ΔI_{K}=ΔI_{M}), and the latter at the same time prevents deflections within the section of pipe (**103,203,303**) to be stabilized.

2. Arrangement according to Claim 1, characterized in that a support (**150**) which is separate from the continuing connector (**140**) is formed by:
a jacket (**110**) arranged on the surface of the pipe (**102**), the said jacket extending from the neighbouring support (**150'**) and ending in front of a continuing connector (**140**), the jacket (**110**) comprising two part-shells, which lie diametrically opposite each other on the surface of the pipe (**102**), or comprising a half-shell ≤ 180° or an extended half-shell enclosing the plastic pipe (**100**) over 180°, or comprising a full shell, which completely surrounds the plastic pipe (**100**);
and means for securely fixing the jacket (**110**) on the surface of the pipe (**102**) in the region of the support (**150**), whereby an axially directed relative movement between the plastic pipe (**100**) and the jacket (**110**) is prevented.

3. Arrangement according to Claim 1 or 2, characterized in that the secure fixing of the jacket (**110**) takes place on the surface of the pipe (**102**) by means of a pattern of lugs (**121**), the individual lugs (**122**) of which protrude from outside through perforations (**111**) provided in the jacket (**110**) to complement the said pattern and dig into the surface of the pipe (**102**), the pattern of lugs (**121**) being located directly on the inner surface of an enclosing part (**130**) in the form of a clamp, gripping securely around the support (**150**), or being located on a separate strip of lugs (**120**) arranged between the said surrounding part and the jacket (**110**);
or by means of a strip of lugs (**120**), which is located between the surface of the pipe (**102**) and the jacket (**110**), there being formed on that side of the strip of lugs (**120**) facing the surface of the pipe (**102**) saw teeth (**124**) which dig into the surface of the pipe (**102**) when pressure is exerted by the enclosing part (**130**) closing together this assembly from the outside, and there being formed on that side of the strip of lugs (**120**) facing the jacket (**110**) studs (**123**) in a complementary formation and distribution to the perforations (**111**) in the jacket (**110**) in such a way that the studs (**123**) fit in the perforations (**111**).

4. Arrangement according to Claim 1 or 2, characterized in that the secure fixing of the jacket (**110,310**) on the surface of the pipe (**102,302**) takes place by means of an enclosing part (**330**) in the form of a welding sleeve from which, during the welding operation, material penetrates through the perforations (**111**) in the jacket (**110**) and bonds with the sectors distributed in the manner of a grid-like pattern on the surface of the pipe (**102**);
or by means of a structure which is applied before or during the installation operation to the inner surface of the jacket (**110**), facing the surface of the pipe (**102**), and is made to dig into the surface of the pipe (**102**) by the pressure exerted by a securely gripping-around enclosing part (**130**);
or by means of a welded joint or adhesive bond between the jacket (**110**) and the surface of the pipe (**102**).

5. Arrangement according to Claims 1 and 3 or 4, characterized in that the support (**250**), enclosing a continuing connector (**240**), is formed by:
a jacket (**210**) arranged on the surface of the pipe (**202**) of a plastic pipe (**200**), with a pipe wall (**201**) optionally reduced in its thickness, and fully enclosing the plastic pipe (**200**), and also taking up compressive forces of the flow medium, the said jacket extending from the neighbouring support (**250'**) and, after shortening of the pipe termination (**205**) over the length of a milling section (**213**) in the direction of the neighbouring support (**250'**), ending at the milling shoulder (**214**);
an insert sleeve (**241**), which fits with its pushed-in part (**245**) in the pipe end piece (**204**) and digs into the inner surface of the pipe end piece (**204**) by means of sealing channels (**244**);
an enclosing part (**230**), which comprises a closure ring part (**234**) and an adjoining supporting part (**233**), and the latter brings about the fixing of the jacket (**210**) on the surface of the pipe (**202**), the closure ring part (**234**) digging into the outer surface of the pipe end piece (**204**) by means of retaining channels (**232**), and an annular claw (**231**) engaging in an annular groove (**242**) located at a distance (**y**) from the stop flange (**243**) of the insert sleeve (**241**).

6. Arrangement according to Claim 1, characterized in that the support (350), including a continuing connector (**340**), is formed by:
a jacket (**310**) arranged on the surface of the pipe (**302**) of a plastic pipe (**300**), with a pipe wall (**301**) optionally reduced in its thickness, and fully enclosing the plastic pipe (**300**), and also taking up compressive forces of the flow medium, the said jacket extending from the neighbouring support (**350'**) and, after shortening of the pipe termination (**305**) over the length of a milling section (**313**) in the direction of the neighbouring support (**350'**), ending at the milling shoulder (**314**);
a surrounding part (**330**), which is designed as a conventional welding sleeve or electric welding sleeve which surrounds the jacket (**310**) by its supporting part (**333**), against the graduation (**335**) of which the complementary milling shoulder (**314**) bears, which sleeve surrounds the stripped pipe end piece (**304**) - over the milling section (**313**) - with its closure ring part (**334**), against the stop flange (**343**) of which the complementary pipe termination (**305**) bears, and which sleeve continues in the continuing connector (**340**), the resistance wires (**336**) embedded in the surrounding part (**330**) in the case of an electric welding sleeve surrounding on the one hand the pipe end piece (**304**) and on the other hand the covered portion of length of the jacket (**310**) provided with perforations (**311**); and by applying a power supply, the full-area welding takes place between the closure ring part (**334**) and the pipe end piece (**304**) and the punctiform welding takes place between the supporting part (**333**), through the perforations (**311**) in the jacket (**310**), and the surface of the pipe (**302**) of the plastic pipe (**300**) located thereunder; whilst in the case of the conventional welding sleeve, an identical welded joint is produced, by melting of plastic at the surfaces to be welded, i.e. the outer circumference of the pipe end piece (**304**) and the inner surface of the enclosing part (**330**) to be pushed onto the pipe end piece (**304**), before joining together by means of heating elements which can be temporarily applied or introduced.

7. Arrangement according to one of Claims 2 to 6, characterized in that a supporting sleeve (**160,260,360**) absorbing the pressure exerted by the enclosing part (**130,230,330**) is pushed into the plastic pipe (**100, 200,300**) from the pipe termination (**105,205,305**).

8. Arrangement according to Claim 3, characterized in that the strip of lugs (**120**) has a pattern of lugs (**121**) which is complementary to the perforations (**111,211)** in terms of their geometry and distribution, and the individual lugs (**122**) have studs (**123**), which are contoured in a manner to fit the shape of the perforations (**111,211**) and are of a height which corresponds approximately to the material thickness of the jacket (**110,210**), and on the studs (**123**) there are formed saw teeth (**124**), each with a vertical flank (**125**) and a sloping flank (**126**), the saw teeth (**124**) being arranged on the strip of lugs (**120**) in uniform distribution with right-flush and left-flush vertical flanks (**125**), while the strip of lugs (**120**) may be structured on its surface facing the enclosing part (**130,230**);
or in that the strip of lugs (**120**) has on the one hand a pattern of studs (**123**) which is complementary to the perforations (**111,121**) in terms of their geometry and distribution, the studs (**123**) contoured in a manner fitting the shape of the perforations (**111,121**) having a height corresponding approximately to the material thickness of the jacket (**110, 210**), and on the other hand the strip of lugs (**120**) has saw teeth (**124**), each with a vertical flank (**125**) and a sloping flank (**126**), while the saw teeth (**124**) on the strip of lugs (**120**) are provided in uniform distribution with right-flush and left-flush vertical flanks (**125**).

## Revendications

1. Dispositif pour limiter la dilatation thermique linéaire due à des variations de la température dans des installations de tubes en matière plastique pour des courants de fluides coulants, avec une fixation rigide de la portion de tube à stabiliser (103, 203, 303) d'un tube en matière plastique (100, 200, 300) et avec deux supports, entre lesquels la fixation est réalisée, destinés à reprendre les efforts de compression et de traction développés lors de la tendance à une dilatation thermique et à assurer un guidage forcé de la portion de tube à stabiliser (103, 203, 303) dans des coquilles de soutien pour empêcher les déviations dans le tube en matière plastique (100, 200, 300) à l'intérieur de la portion de tube à stabiliser (103, 203, 303), caractérisé en ce que sur la portion de tube à stabiliser (103, 203, 303) court une gaine (110, 210, 310) rigide en direction axiale, qui entoure celle-ci partiellement ou entièrement, qui est solidement fixée sur la surface du tube (102, 202, 302), dans les deux supports (150, 150'; 250, 250'; 350, 350') serrant la portion de tube à stabiliser (103, 203, 303), et qui possède un coefficient de dilatation linéaire (α_{M}) sensiblement plus petit que le coefficient de dilatation linéaire (α_{K}) du tube en matière plastique (100, 200, 300), avec le résultat que la variation de longueur (Δl_{K}), par nature nettement plus grande, du tube en matière plastique (100, 200, 300) est forcément limitée à la variation de longueur (Δl_{M}) plus petite de la gaine (110, 210, 310) et que cette dernière empêche également les déviations à l'intérieur de la portion de tube à stabiliser (103, 203, 303).

2. Dispositif suivant la revendication 1, caractérisé en ce qu'un support (150) séparé du raccord de continuation (140) est formé par:
une gaine (110) disposée sur la surface du tube (102), venant du support voisin (150') et se terminant avant un raccord de continuation (140), la gaine (110) se composant de deux coquilles partielles, qui sont opposées diamétralement sur la surface du tube (102), ou d'une demi-coquille ≤ 180°, respectivement d'une demi-coquille élargie entourant le tube en matière plastique (100) sur plus de 180°, ou d'une coquille complète, qui entoure entièrement le tube en matière plastique (100); et
des moyens pour la fixation solide de la gaine (110) sur la surface du tube (102) dans la région du support (150), avec le résultat qu'un mouvement relatif en direction axiale entre le tube en matière plastique (100) et la gaine (110) est empêché.

3. Dispositif suivant la revendication 1 ou 2, caractérisé en ce que la fixation solide de la gaine (110) sur la surface du tube (102) est réalisée au moyen d'un réseau d'ergots (121), dont les ergots individuels (122) s'engagent par l'extérieur dans des trous (111) prévus en un réseau complémentaire à ce dernier dans la gaine (110) et s'accrochent dans la surface du tube (102), le réseau d'ergots (121) se trouvant directement sur la surface intérieure d'une pièce enveloppante (130), ayant la forme d'une manchette, entourant solidement le support (150), ou sur une bande à ergots (120) séparée disposée entre cette dernière et la gaine (110);
ou au moyen d'une bande à ergots (120), qui se trouve entre la surface du tube (102) et la gaine (110), avec, formées dans la face de la bande à ergots (120) tournée vers la surface du tube (102), des dents de scie (124) qui s'accrochent dans la surface du tube (102) lors du serrage de la pièce enveloppante (130) enfermant par l'extérieur cette jonction, et avec des socles (123) qui sont formés dans la face de la bande à ergots (120) tournée vers la gaine (110), avec une structure et une répartition complémentaires aux trous (111) dans la gaine (110), d'une façon telle que les socles (123) se placent dans les trous (111).

4. Dispositif suivant la revendication 1 ou 2, caractérisé en ce que la fixation solide de la gaine (110, 310) sur la surface du tube (102, 302) est réalisée au moyen d'une pièce enveloppante (330) ayant la forme d'un manchon de soudage, à partir duquel de la matière pénètre dans les trous (111) de la gaine (110) pendant l'opération de soudage et s'unit aux secteurs répartis en réseau sur la surface du tube (102);
ou au moyen d'une structure appliquée sur la surface intérieure de la gaine (110) tournée vers la surface du tube (102), avant, respectivement pendant, l'opération de montage, qui s'accroche dans la surface du tube (102) sous la pression de serrage d'une pièce enveloppante (130) qui l'entoure solidement;
ou au moyen d'un assemblage soudé, respectivement collé, entre la gaine (110) et la surface du tube (102).

5. Dispositif suivant les revendications 1 et 3 ou 4, caractérisé en ce que le support (250) comprenant un raccord de continuation (240) est formé par:
une gaine (210) disposée sur la surface du tube (202) d'un tube en matière plastique (200), avec une paroi de tube (201) réduite au choix en épaisseur, et entourant entièrement le tube en matière plastique (200), reprenant également les efforts dus à la pression du fluide en écoulement, venant du support voisin (250') et se terminant au retrait de fraisage (214), après un raccourcissement à partir de la fin du tube (205) sur la longueur d'une portée de fraisage (213) en direction du support voisin (250');
une douille d'insertion (241) logée par sa partie insérable (245) dans la partie d'extrémité du tube (204) et s'accrochant à la surface intérieure de la partie d'extrémité du tube (204) au moyen de stries d'étanchéité (244); et
une pièce enveloppante (230), qui se compose d'une partie annulaire de fermeture (234) et d'une partie de support (233) qui s'y rattache, et cette dernière entraîne la fixation de la gaine (210) sur la surface du tube (202), la partie annulaire de fermeture (234) s'accrochant à la surface extérieure de la partie d'extrémité du tube (204) au moyen de stries de maintien (232) et une griffe annulaire (231) s'engageant dans une gorge annulaire (242) se trouvant à la distance (y) de la bride de butée (243) de la douille d'insertion (241).

6. Dispositif suivant les revendications 1 et 4, caractérisé en ce que le support (350) comprenant un raccord de continuation (340) est formé par:
une gaine (310) disposée sur la surface du tube (302) d'un tube en matière plastique (300), avec une paroi de tube (301) réduite au choix en épaisseur, et entourant entièrement le tube en matière plastique (300), reprenant également les efforts dus à la pression du fluide en écoulement, venant du support voisin (350') et se terminant au retrait de fraisage (314), après un raccourcissement à partir de la fin du tube (305) sur la longueur d'une portée de fraisage (313) en direction du support voisin (350');
une pièce enveloppante (330), qui est constituée comme un manchon de soudage conventionnel ou un manchon d'électro-soudage, qui entoure la gaine (310) avec sa partie de support (333), sur l'épaulement (335) de laquelle s'applique le retrait complémentaire de fraisage (314), qui - sur la portée fraisée (313) - entoure avec sa pièce annulaire de fermeture (334) la partie d'extrémité du tube sans gaine (304), sur la bride de butée (343) duquel s'applique le bout du tube complémentaire (305), et qui se poursuit dans le raccord de continuation (340), dans lequel les fils de résistance (336) noyés dans la pièce enveloppante (330) dans le cas d'un manchon d'électro-soudage entourent d'une part la partie d'extrémité du tube (304) et d'autre part le tronçon longitudinal recouvert de la gaine (310) pourvue de trous (311); et par application d'une source de courant se produit le soudage sur toute la surface entre la pièce annulaire de fermeture (334) et la partie d'extrémité du tube (304) ainsi que le soudage ponctuel entre la partie de support (333) à travers les trous (311) dans la gaine (310) et la surface du tube (302) du tube en matière plastique (300) se trouvant en dessous; tandis qu'avec un manchon de soudage conventionnel, on réalise un assemblage soudé identique par fusion de matière plastique sur les faces à souder, c'est-à-dire la surface latérale extérieure de la partie d'extrémité du tube (304) ainsi que la face intérieure de la pièce enveloppante (330) à glisser sur la partie d'extrémité du tube (304), avant la jonction au moyen d'éléments chauffants à appliquer, respectivement à introduire, temporairement par l'extérieur.

7. Dispositif suivant l'une quelconque des revendications 2 à 6, caractérisé en ce qu'une douille de soutien (160, 260, 360) reprenant la pression de serrage de la pièce enveloppante (130, 230, 330) est glissée dans le tube en matière plastique (100, 200, 300) à partir de l'extrémité du tube (105, 205, 305).

8. Dispositif suivant la revendication 3, caractérisé en ce que la bande à ergots (120) présente un réseau d'ergots (121) complémentaire aux trous (111, 211) en ce qui concerne la géométrie et la répartition de ceux-ci, et les ergots individuels (122) possèdent des socles (123), profilés en conformité à la forme des trous (111, 211), avec une hauteur qui correspond environ à l'épaisseur de matière de la gaine (110, 210), et des dents de scie (124) sont formées sur les socles (123), chacune avec un flanc vertical (125) et un flanc incliné (126), les dents de scie (124) étant disposées sur la bande à ergots (120) en une répartition uniforme avec des flancs verticaux (125) de blocage vers la droite et vers la gauche, tandis que la bande à ergots (120) peut être structurée sur sa surface tournée vers la pièce enveloppante (130, 230);
ou en ce que la bande à ergots (120) présente d'une part un réseau de socles (123) complémentaire aux trous (111, 121) en ce qui concerne la géométrie et la répartition de ceux-ci, les socles (123) profilés en conformité à la forme des trous (111, 121) possèdent une hauteur correspondant environ à l'épaisseur de matière de la gaine (110, 210), et en ce que la bande à ergots (120) présente d'autre part des dents de scie (124) comportant chacune un flanc vertical (125) et un flanc incliné (126), tandis que les dents de scie (124) sont prévues sur la bande à ergots (120) en une répartition uniforme avec des flancs verticaux (125) de blocage vers la droite et vers la gauche.
